# FASCICULE DE BREVET EUROPEEN

(11) **EP 3 373 117 B1**
(45) Date de publication et mention de la délivrance du brevet: **25.11.2020**
(21) Numéro de dépôt: 18161080.9
(22) Date de dépôt: 09.03.2018
(51) Int. Cl.: G06F 3/01, G06F 3/03, B60K 37/06

(54) **PROCÉDÉ DE COMMANDE D'AU MOINS UNE FONCTION D'UN VÉHICULE PAR L'ACCOMPLISSEMENT D'AU MOINS UN GESTE DE COMMANDE ASSOCIÉ À CETTE FONCTION**
STEUERUNGSVERFAHREN MINDESTENS EINER FUNKTION EINES FAHRZEUGS DURCH DURCHFÜHRUNG MINDESTENS EINES STEUERUNGSHANDGRIFFS IM ZUSAMMENHANG MIT DIESER FUNKTION
METHOD FOR CONTROLLING AT LEAST ONE FUNCTION OF A VEHICLE BY THE COMPLETION OF AT LEAST ONE CONTROL GESTURE ASSOCIATED WITH THIS FUNCTION

(30) Priorité: 09.03.2017 FR 1751939
(43) Date de publication de la demande: 12.09.2018
(73) Titulaire: Valeo Comfort and Driving Assistance, 94046 Créteil Cedex (FR)
(72) Inventeur: PINOTEAU, Jérémie, 94046 Créteil CEDEX (FR); BALANDREAU, Pierre-Emmanuel, 94046 Créteil CEDEX (FR); MIGUEL, Fabien, 94046 Créteil CEDEX (FR)
(74) Mandataire: Delplanque, Arnaud

(56) Documents cités:
- US-A1- 2013 204 457
- US-A1- 2014 309 871
- US-A1- 2015 088 336
- US-A1- 2016 368 382

## Description

### DOMAINE TECHNIQUE AUQUEL SE RAPPORTE L'INVENTION

La présente invention concerne de manière générale le domaine des procédés de commande d'au moins une fonction d'un véhicule par un individu présent à bord de ce véhicule, à travers l'accomplissement, par cet individu, d'au moins un geste de commande associé à cette fonction.

Elle concerne également un dispositif pour mettre en œuvre ce procédé.

### ARRIERE-PLAN TECHNOLOGIQUE

On connaît notamment un procédé de commande tel que décrit ci-dessus, grâce auquel le conducteur du véhicule peut prendre ou rejeter un appel téléphonique entrant, ou encore monter ou baisser le volume de la radio, par un geste de commande de la main.

Cependant, avec un tel procédé de commande, le conducteur peut commander certaines fonctions de manière involontaire en effectuant des gestes intempestifs, par exemple au cours d'une conversation avec un passager du véhicule. Ce problème est notamment décrit dans l'art antérieur, en particulier US2016/368382A1, US2015/088336A1, US 2013/204457A1, US2014/309871 A1.

Pour palier à ce problème de commande involontaire, il est connu de choisir de manière spécifique les gestes de commande à associer aux fonctions du véhicule, de manière à exclure les gestes dits « naturels », c'est-à-dire ceux survenant naturellement dans une conversation.

Néanmoins, malgré ces précautions, il n'est pas impossible que certaines fonctions soient tout de même déclenchées de manière involontaire.

En outre, le panel de gestes de commande possibles est alors réduit. Cela peut aboutir à l'utilisation de gestes difficilement exécutables par le conducteur, ce qui n'est pas souhaitable, notamment pour des raisons de sécurité.

### OBJET DE L'INVENTION

Afin de remédier aux inconvénients précités de l'état de la technique, la présente invention propose un procédé qui permet de diminuer les commandes involontaires de fonctions.

Plus particulièrement, on propose selon l'invention un procédé de commande d'au moins une fonction d'un véhicule par un individu présent à bord de de ce véhicule, à travers l'accomplissement, par cet individu, d'au moins un geste de commande associé à cette fonction, selon lequel il est prévu des étapes de :
a) détection du geste de commande accompli par l'individu dans une zone de détection dudit véhicule,
b) détermination d'un état d'interaction entre ledit individu et son environnement, et
c) en fonction de l'état d'interaction déterminé à l'étape b), commande de la fonction associée audit geste de commande détecté à l'étape a).

Ainsi, l'étape b) du procédé selon l'invention permet de déterminer le contexte de réalisation du geste de commande détecté à l'étape a), de sorte qu'en fonction de ce contexte le procédé évalue si le geste de commande est associé à une volonté du conducteur de commander la fonction, ou si ce geste de commande peut avoir été effectué par le conducteur de manière intempestive.

D'autres caractéristiques non limitatives et avantageuses du procédé conforme à l'invention sont les suivantes :
- à l'étape b), l'état d'interaction de l'individu avec l'environnement est déterminé parmi un état d'interaction nul et un état d'interaction actif ;
- pour la détermination de l'état d'interaction de l'individu avec l'environnement, on utilise un dispositif de surveillance dudit individu, ledit dispositif de surveillance étant adapté à détecter des mouvements de lèvres de l'individu et/ou des mouvements de tête ou des yeux dudit individu ;
- pour la détermination de l'état d'interaction de l'individu avec l'environnement, on utilise un dispositif de suivi de mouvements du haut du corps dudit individu.

Selon l'invention, lorsque l'état d'interaction déterminé à l'étape b) est actif, l'étape c) comprend les sous-étapes suivantes :
c1) émission d'un signal à destination d'au moins un individu présent dans le véhicule,
c2) réception d'une réponse d'au moins un individu présent dans le véhicule audit signal émis à l'étape c1), et,
c3) en fonction de la réponse reçue à l'étape c2), commande de la fonction associée audit geste de commande détecté à l'étape a).

De manière avantageuse, le procédé comprend les caractéristiques suivantes:
- le signal émis à l'étape c1) comprend un signal lumineux et/ou un signal sonore, et/ou un message visuel et/ou un message audio et/ou un signal haptique ;
- la réponse émise à l'étape c2) correspond à une réponse active de confirmation de la commande, ou à une réponse active ou passive d'infirmation de ladite commande ;
- la réponse active de confirmation ou d'infirmation est réalisée par un individu présent dans le véhicule, en effectuant un geste de réponse prédéterminé, et/ou en regardant dans une direction spécifique, et/ou en agissant sur une interface du véhicule et/ou en produisant une commande orale ;
- lorsque l'état d'interaction déterminé à l'étape b) est nul, l'étape c) comprend la commande directe de la fonction associée audit geste de commande détecté à l'étape a).

L'invention concerne aussi un dispositif de commande d'au moins une fonction d'un véhicule par un individu présent à bord de ce véhicule, à travers l'accomplissement, par cet individu, d'au moins un geste de commande associé à cette fonction, ledit dispositif comprenant les caractéristiques énoncées dans la revendication 8.

Ainsi, le dispositif de commande est adapté à mettre en œuvre le procédé de commande selon l'invention.

Avantageusement, il est en outre prévu dans le dispositif de commande une interface de communication entre ledit dispositif de commande et l'individu.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement, en vue avant, un véhicule automobile comprenant un dispositif de commande selon l'invention ; et,
- la figure 2 représente un organigramme des étapes principales du procédé selon l'invention.

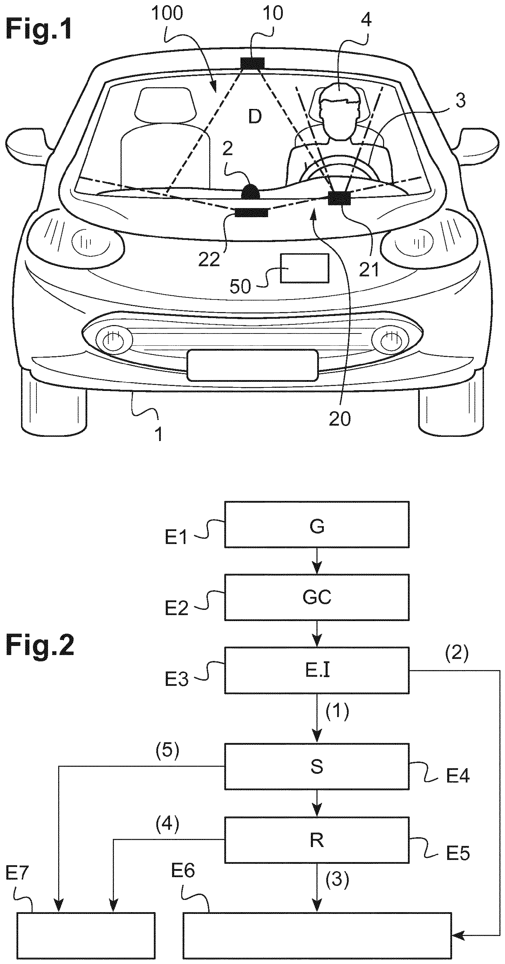

Sur la figure 1, on a représenté l'avant d'un véhicule 1 automobile embarquant un dispositif de commande 100 de fonctions du véhicule par gestes de commande GC selon l'invention.

Un tel dispositif de commande 100 est adapté à détecter des gestes réalisés dans une zone de détection D du véhicule, par un individu présent dans le véhicule, à reconnaître, parmi ces gestes, des gestes de commande GC, et à commander certaines fonctions du véhicule à partir desdits gestes de commande GC, uniquement lorsque ceux-ci ont été réalisés de manière volontaire.

Les fonctions du véhicule commandées par les gestes de commande sont par exemple des fonctions multimédias du véhicule telles que « allumer la radio », « éteindre la radio » « monter le volume de la radio », « baisser le volume de la radio », « prendre un appel téléphonique entrant », « rejeter un appel téléphonique entrant », « émettre un appel téléphonique », « allumer le GPS du véhicule », « éteindre le GPS du véhicule », etc. Bien sûr, il pourrait aussi s'agir de fonctions de conduite du véhicule telles que « allumer/ éteindre le limiteur ou régulateur de vitesse », « allumer/ éteindre les veilleuses/ feux de route/ feux de conduite/ feux de détresse », « allumer/ éteindre le clignotant droite/ gauche », « faire un appel de phares » etc. D'autres fonctions du véhicule pourraient aussi être commandées de cette manière, telles que « ouvrir/fermer le toit », « ouvrir/fermer le coffre », « fermer à clef les portières du véhicule », « monter/descendre une/toutes les vitres du véhicule » etc.

En pratique, un geste de commande GC spécifique est associé à chaque fonction du véhicule. Au lieu d'être commandée de manière classique par une action sur une interface physique, chaque fonction est ainsi commandée par un geste de commande GC de la main de l'individu présent dans le véhicule 1, réalisé dans la zone de détection D du véhicule.

Comme le montre la figure 1, le dispositif de commande 100 comprend un module de détection 10 d'un geste de commande dans la zone de détection D dudit véhicule, un module de détermination 20 d'un état d'interaction El dudit individu avec son environnement, et une unité de commande 50 adaptée à mettre en œuvre le procédé de commande selon l'invention.

Dans l'exemple de la figure 1, les modules de détection et de détermination 10, 20 sont distincts l'un de l'autre. Comme il sera détaillé ci-après, ils sont disposés à des endroits différents dans l'habitacle du véhicule 1. Dans un mode de réalisation non représenté, on utilise un seul système qui à la fois détecte le geste de commande et détermine l'état d'interaction du conducteur (par exemple le body tracking).

Le module de détection 10 est adapté à détecter tous les gestes G réalisés dans la zone de détection D du véhicule 1 et à identifier parmi ces gestes G, ceux qui sont des gestes de commande GC.

Un tel module de détection 10 est connu et ne sera pas décrit en détails. On précisera uniquement qu'il comporte des moyens de capture d'images, tels qu'une caméra. Cette caméra est ici à angle relativement faible et est adaptée à capturer plusieurs images par seconde de manière que le module de détection 10 puisse déterminer les gestes G réalisés dans la zone de détection D.

Un geste G correspond par exemple à un mouvement, et/ou à une pose, et/ou à une configuration statique particulière de la main et/ou de l'avant bras du conducteur 4.

Ici, la zone de détection D du module de détection 10 est centrée sur le levier de vitesse 2 et englobe une partie du volant 3 du véhicule 1 et une partie de la zone passager (voir figure 1). A cet effet, la caméra est par exemple placée dans un plafonnier avant du véhicule 1, de sorte qu'elle prend en vue de dessus la zone de détection D.

De préférence, le module de détection 10 détecte les gestes G réalisés par le conducteur 4. Il peut aussi détecter les gestes réalisés par le passager avant du véhicule qui a facilement accès à cette zone de détection D. Dans la suite de la description, on considérera que le conducteur 4 est celui qui réalise les gestes dans la zone de détection D.

Le module de détection 10 comprend en outre des moyens de traitement et d'analyse des images capturées par lesdits moyens de capture d'images.

Ces moyens de traitement et d'analyse sont programmés notamment pour reconnaître la forme de la main et/ou de l'avant bras du conducteur 4 dans les images capturées par les moyens de capture d'image du module de détection 10.

Ils sont également programmés pour détecter un mouvement et/ou identifier une configuration de la main et/ou de l'avant-bras du conducteur 4, à partir de plusieurs images successives capturées par les moyens de capture d'image, et comparer ces mouvements et/ou configuration à ceux d'une base de données contenant les mouvements correspondants aux gestes de commande GC associés à certaines des fonctions du véhicule.

A l'issue de cette comparaison, le module de détection 10 est programmé pour identifier ou non une séquence d'image capturées comme relative à un geste de commande GC.

Les gestes de commande GC du conducteur 4 sont ainsi détectés.

En pratique, les moyens de traitement et d'analyse du module de détection 10 reçoivent les images capturées par les moyens de capture d'image dudit module de détection 10. Ces moyens de traitement et d'analyse peuvent être intégrés à un boîtier comprenant lesdits moyens de capture d'image ou être déportés à distance de ces moyens de capture d'image, par exemple intégrés à une unité électronique et informatique du véhicule 1 qui reçoit des informations de différents capteurs du véhicule et commande le fonctionnement de certains organes de ce véhicule 1.

Le module de détermination 20 est quant à lui adapté à surveiller l'individu ayant réalisé les gestes G détectés, ici le conducteur 4, de manière à déterminer l'état d'interaction El du conducteur 4 avec son environnement.

De préférence, le module de détermination 20 surveille en continu le conducteur 4, quel que soit par ailleurs les gestes G effectués par ce conducteur 4 dans la zone de détection D.

En pratique, l'état d'interaction El du conducteur 4 avec son environnement est déterminé parmi un état d'interaction actif et un état d'interaction nul.

Le conducteur 4 est dans l'état d'interaction actif avec son environnement de préférence lorsqu'il interagit avec un autre individu présent à bord du véhicule 1. Par exemple, le conducteur 4 est dans l'état d'interaction actif lorsqu'il est engagé dans une conversation avec cet autre individu.

Le conducteur 4 est également dans l'état d'interaction actif avec son environnement lorsqu'il est engagé dans une conversation téléphonique, lorsqu'il fredonne un air de musique, ou lorsqu'il interagit, via des gestes ou des paroles, avec des individus situés à l'extérieur du véhicule, par exemple avec les conducteurs d'autres véhicules.

Ainsi, l'état d'interaction actif est un état dans lequel le conducteur 4 est susceptible de réaliser des gestes G, liés par exemple à la conversation dans laquelle il est engagé ou à la musique qu'il écoute. Dans l'état d'interaction actif, le conducteur 4 effectue notamment des mouvements de lèvres, et/ou de tête, et/ou des yeux, et/ou du haut du corps.

Le conducteur 4 est dans l'état d'interaction nul lorsqu'il n'interagit pas avec son environnement. L'état d'interaction nul est décrit à titre d'exemple non mis en œuvre par l'invention. En particulier, dans l'état d'interaction nul, le conducteur 4 n'effectue aucun mouvement de lèvres car il n'est pas en conversation (ni avec un individu présent à bord, ni téléphonique, ni avec un individu extérieur au véhicule), et ne fredonne pas d'air de musique.

Il ressort de ce qui précède qu'il est possible de distinguer les états d'interaction actif et nul du conducteur 4 en surveillant le mouvement des lèvres dudit conducteur 4. Il est également possible de distinguer ces deux états d'interaction en surveillant, en plus ou à la place du mouvement des lèvres, les mouvements de la tête du conducteur 4. Il est encore possible de distinguer ces deux états d'interaction en surveillant, en plus ou à la place du mouvement des lèvres et/ou de la tête, les mouvements du haut du corps du conducteur 4.

Ici, le module de détermination 20 comprend à cet effet un dispositif de surveillance 21 du visage du conducteur 4.

Un tel dispositif de surveillance 21 est notamment adapté à détecter des mouvements de lèvres sur le visage du conducteur et/ou des mouvements de tête du conducteur 4. Le dispositif de surveillance 21 est disposé par exemple derrière le volant 3 du véhicule 1.

Un tel dispositif de surveillance 21, plus connu sous l'acronyme DMS pour « Driver Monitoring System » en langue anglaise, comporte des moyens de capture d'images, tels qu'une caméra. Cette caméra est adaptée à capturer plusieurs images par seconde de la tête du conducteur 4.

En variante ou en complément, le module de détermination 20 peut comprendre un dispositif de suivi de mouvements 22 du haut du corps du conducteur 4.

Ce dispositif de suivi de mouvements 22, aussi appelé « body tracking system » en langue anglaise, comporte des moyens de capture d'images tels qu'une (ou plusieurs) caméra(s). Cette caméra est ici à grand angle. Elle est ici disposée dans une région centrale de la plage avant du véhicule 1, à proximité du pare-brise, de manière à présenter un champ de vision englobant le conducteur 4 et un éventuel passager avant (voir figure 1). Cette caméra grand angle est adaptée à capturer plusieurs images par seconde.

Le module de détermination 20 comprend en outre des moyens de traitement et d'analyse des images capturées par le dispositif de surveillance 21 et/ou par le dispositif de suivi de mouvements 22.

Ces moyens de traitement et d'analyse sont programmés notamment pour reconnaître, en continu, la forme de la bouche et/ou de la tête et/ou du haut du corps d'un individu dans les images capturées par le dispositif de surveillance 21 et/ou par le dispositif de suivi de mouvements 22.

Ils sont également programmés pour détecter, en continu, des mouvements de ces formes à partir de plusieurs images successives capturées.

L'état d'interaction El de l'individu observé, généralement le conducteur 4 du véhicule, est déduit des mouvements détectés. Lorsqu'une séquence d'images correspondant à un mouvement des formes est identifiée, l'état d'interaction El est déterminé comme étant un état d'interaction actif, et lorsqu'une séquence d'images ne comprenant aucun mouvement est identifiée, l'état d'interaction El est déterminé comme nul.

Selon une variante plus sophistiquée, on pourrait envisager que les moyens de traitement et d'analyse soient programmés pour comparer les mouvements détectés à ceux d'une base de données contenant les mouvements correspondants aux mouvements de la bouche, de la tête ou du haut du corps pendant une conversation. Plus globalement, les mouvements détectés peuvent être comparés à un modèle (lié ou non à une base de données, construit par un expert et/ou par apprentissage automatique, déterministe et/ou statistique)

A l'issue de cette comparaison, le module de détection est programmé pour identifier ou non une séquence d'images capturées comme relative à une conversation de l'individu observé. L'état d'interaction actif est alors déduit de l'identification d'une conversation, tandis que l'état d'interaction nul serait déduit lorsqu'aucune conversation ne serait identifiée.

En pratique, les moyens de traitement et d'analyse du module de détermination 20 reçoivent les images capturées par le dispositif de surveillance 21 et/ou par le dispositif de suivi de mouvements 22. Ces moyens de traitement et d'analyse peuvent être intégrés à un boîtier comprenant lesdits moyens de capture d'image du dispositif de surveillance 21 et/ou du dispositif de suivi de mouvements 22, ou être déportés à distance de ces moyens de capture d'image, par exemple intégrés à l'unité électronique et informatique du véhicule qui reçoit des informations de différents capteurs du véhicule et commande le fonctionnement de certains organes de ce véhicule.

L'unité de commande 50 du dispositif de commande 100 selon l'invention comprend des moyens de communication avec les modules de détection et de détermination 10, 20.

Cette unité de commande 50 est par exemple intégrée à l'unité électronique et informatique du véhicule 1.

L'unité de commande 50 est adaptée à recevoir, ici par l'intermédiaire de ses moyens de communication, des données provenant du module de détection 10 et du module de détermination 20, indiquant d'une part la détection d'un geste de commande GC effectué par le conducteur 4 et d'autre part l'état d'interaction El courant du conducteur 4, c'est-à-dire l'état d'interaction El correspondant à la détection du geste de commande GC.

Le dispositif de commande 100 comprend aussi une interface de communication (non représentée) adaptée à communiquer avec le conducteur 4. Une telle interface de communication peut notamment comprendre un haut-parleur du véhicule pour la diffusion d'un signal sonore et/ou d'un message audio à destination du conducteur 4, le tableau de bord du véhicule pour la diffusion d'un message écrit à destination du conducteur 4, ou encore un dispositif d'éclairage pour l'envoi de signaux lumineux à destination du conducteur 4.

L'interface de communication peut aussi comprendre un micro pour la réception de messages oraux émis par le conducteur, une interface physique, par exemple des boutons, sur laquelle le conducteur 4 peut agir pour communiquer avec ledit dispositif de commande 100, ou encore une caméra adaptée à déceler la direction du regard du conducteur 4.

Comme cela est décrit plus en détails ci-dessous, l'unité de commande 50 est ici programmée pour effectuer les étapes suivantes lorsqu'un geste de commande GC est détecté et que l'état d'interaction El du conducteur 4 est actif lors de la détection de ce geste de commande GC:
c1) émission d'un signal S à destination du conducteur 4 grâce à l'interface de communication,
c2) réception d'une réponse du conducteur 4 grâce à cette interface de communication, et,
c3) en fonction de la réponse reçue à l'étape c2), commande de la fonction associée audit geste de commande GC détecté à l'étape a).

En outre, l'unité de commande 50 est programmée pour commander directement la fonction associée audit geste de commande GC lorsque ledit geste de commande GC est détecté et que l'état d'interaction El du conducteur 4 est nul lors de la détection du geste de commande GC.

On s'est attaché dans la suite à décrire le procédé mis en œuvre par le dispositif de commande 100 selon l'invention.

Selon ce procédé, il est prévu des étapes de :
a) détection du geste de commande GC accompli par le conducteur 4 dans la zone de détection D dudit véhicule 1,
b) détermination d'un état d'interaction El entre ledit conducteur 4 et son environnement, et,
c) en fonction de l'état d'interaction El déterminé à l'étape b), commande de la fonction associée audit geste de commande GC détecté à l'étape a).

Sur la figure 2, on a représenté les étapes principales de ce procédé.

De manière remarquable, comme il sera détaillé ci-après, le procédé selon l'invention permet de vérifier que le geste réalisé dans la zone de détection D et reconnu comme un geste de commande GC par le dispositif de commande 100 correspond à une volonté réelle du conducteur 4 de commander la fonction correspondante lorsque l'état d'interaction du conducteur avec son environnement indique que ce geste pourrait être involontaire.

### Etape a)

A l'étape a), le module de détection 10 détecte le geste de commande GC dans la zone de détection D.

En pratique, le module de détection 10 capture en continu des images de la zone de détection D, traite et analyse ces images en continu de manière à reconnaître dans ces images la forme et l'emplacement de la main et/ou de l'avant bras du conducteur 4 lorsqu'ils s'y trouvent.

A cet effet, le module de détection 10 capture une séquence d'images de la zone de détection D. Il traite et analyse ces images pour y reconnaître la forme de la main et/ou de l'avant bras du conducteur 4. Il analyse plusieurs images successives capturées pour déterminer le geste G réalisé dans la zone de détection D, c'est-à-dire le mouvement ou la configuration particulière de la main et/ou de l'avant bras du conducteur 4 (bloc E1 de la figure 2).

Le module de détection 10 compare alors le geste G déterminé avec la base de données des gestes de commande GC, pour déterminer si ce geste G est un geste de commande GC (bloc E2 de la figure 2).

Lorsque le geste G déterminé correspond à un des gestes de commande GC de la base de données, le module de détection 10 identifie ce geste G comme un geste de commande GC. Il communique à l'unité de commande 50 un signal associé à la détection de ce geste de commande.

### Etape b)

Le dispositif de commande 100 détermine également, à l'étape b), l'état d'interaction El du conducteur 4 avec son environnement (bloc E3 de la figure 2).

Autrement dit, le dispositif de commande 100 détermine le contexte dans lequel le geste de commande GC a été détecté à l'étape a), de manière à déterminer si ce geste de commande GC est associé à une commande volontaire d'une fonction du véhicule ou s'il est possible qu'il ait été effectué de manière involontaire.

Le module de détermination 20 du dispositif de commande 100 communique à l'unité de commande 50, l'état d'interaction El courant du conducteur 4 qui correspond au moment de la détection du geste de commande GC, par exemple celui correspondant à la seconde entourant le moment de la détection.

Pour ce faire, le module de détermination 20 communique à l'unité de commande 50 l'état d'interaction El du conducteur 4 qui a été déterminé par les moyens de traitement et d'analyse grâce aux images capturées par le dispositif de surveillance 21 et/ou le dispositif de suivi de mouvements 22 aux instants précédant directement le moment de la détection du geste de commande GC et/ou succédant directement ce moment.

Il s'agit en pratique de l'état d'interaction déterminé par le module de détermination 20 à partir du traitement des images capturées par le module de détermination 20 simultanément aux images capturées par le module de détection 10 dont le traitement montre la réalisation du geste de commande GC ou aux instants précédant et/ou suivant la capture de ces images.

Comme décrit précédemment, lorsque les moyens de traitement et d'analyse du module de détermination 20 détectent que l'emplacement des lèvres et/ou de la tête ou du haut du corps du conducteur 4 a changé dans les images successives capturées par le dispositif de surveillance 21 et/ou le dispositif de suivi de mouvements 22, le module de détermination 20 en déduit qu'il y a eu un mouvement des lèvres sur le visage du conducteur 4, et/ou un mouvement de la tête du conducteur 4 et/ou un mouvement du haut du corps du conducteur 4, caractéristiques de l'état d'interaction actif du conducteur 4 avec son environnement.

Au contraire, lorsque les moyens de traitement et d'analyse du dispositif de détermination 20 ne détectent aucun mouvement de lèvres et aucun mouvement de tête ou du haut du corps du conducteur 4 dans les images successives analysées, le module de détermination 20 en déduit que le conducteur 4 est dans l'état d'interaction nul avec son environnement.

### Etape c)

Lorsqu'il est déterminé à l'étape b) que le conducteur 4 est dans l'état d'interaction nul avec son environnement (voie (2) de la figure 2) au moment de la détection du geste de commande GC, le dispositif de commande 100 interprète ce geste de commande GC détecté à l'étape a) comme une commande volontaire de la fonction correspondante du véhicule. Ce cas n'est pas mis en œuvre par l'invention.

Ainsi, le conducteur 4, par son geste de commande GC, commande volontairement la fonction du véhicule associée à ce geste de commande GC.

Autrement dit, lorsque l'état d'interaction El déterminé à l'étape b) est nul, le dispositif de commande 50 commande directement la fonction associée audit geste de commande GC détecté à l'étape a) (bloc E6 de la figure 2).

Par exemple, le dispositif de commande 50 active directement la radio, monte ou baisse le son, autorise la réponse à un appel téléphonique.

Lorsqu'il est déterminé à l'étape b) que le conducteur 4 est dans l'état d'interaction actif avec son environnement (voie (1) de la figure 2) au moment de la détection du geste de commande GC, le dispositif de commande 100 interroge le conducteur 4 quant à sa volonté réelle de commander la fonction associée à ce geste de commande GC.

A cet effet, l'unité de commande 50 met en œuvre les sous-étapes suivantes :
c1) émission d'un signal à destination du conducteur 4 (bloc E4 de la figure 2),
c2) réception d'une réponse du conducteur 4, et,
c3) en fonction de la réponse reçue à l'étape c2), commande de la fonction associée audit geste de commande GC détecté à l'étape a).

### Sous-étape c1)

L'unité de commande 50 commande à l'interface de communication du dispositif de commande 100, l'envoi d'un signal S à destination du conducteur 4 (bloc E4 de la figure 2).

Un tel signal S comprend par exemple un signal lumineux émis par le dispositif d'éclairage, et/ou un message visuel émis par le tableau de bord, et/ou un signal sonore et/ou un message audio émis par le haut-parleur du véhicule.

Par ce signal S émis, le conducteur 4 est invité à confirmer sa volonté de commander la fonction associée au geste de commande GC qui a été détecté dans la zone de détection D.

Autrement dit, l'interface de communication du dispositif de commande 100 interroge le conducteur 4 pour savoir s'il a réalisé le geste de commande GC avec la volonté de commander la fonction associée, ou si ce geste de commande GC a été réalisé sans intention de commander cette fonction.

En pratique, l'interface de communication demande au conducteur, par exemple via un message audio ou écrit, s'il souhaite déclencher la fonction du véhicule.

### Sous-étape c2)

En réponse à ce signal S, le conducteur 4 peut émettre une réponse R active de confirmation de la commande ou une réponse R active d'infirmation de ladite commande.

Plus précisément, le conducteur 4 peut réaliser un geste de réponse prédéterminé qui confirme ou infirme la commande. Par exemple, le conducteur 4 peut reproduire le geste de commande GC pour confirmer la commande.

En variante ou en complément, le conducteur 4 peut aussi infirmer ou confirmer la commande de la fonction, en regardant dans une direction spécifique du véhicule.

En variante ou en complément, on peut aussi envisager que le conducteur 4 puisse infirmer ou confirmer la commande en agissant sur l'interface physique du véhicule, par exemple en appuyant sur un bouton de cette interface.

En variante ou en complément, on peut encore envisager que le conducteur 4 puisse infirmer ou confirmer la commande en produisant une commande orale.

L'interface de communication du dispositif de commande 100 reçoit alors la réponse R active de confirmation ou d'infirmation du conducteur 4 (bloc E5 de la figure 2). L'interface de communication communique cette réponse à l'unité de commande 50.

Par ailleurs, en l'absence de réponse du conducteur 4, après un délai de réponse prédéterminé, l'interface de communication communique cette absence de réponse à l'unité de commande 50. L'unité de commande 50 est programmée pour interpréter cette absence de réponse comme la réception d'une réponse R passive d'infirmation de la commande.

Le délai de réponse prédéterminé est par exemple compris entre 1 et 10 secondes.

### Sous-étape c3)

Lorsque la réponse R reçue confirme la commande (voie (3) de la figure 2), l'unité de commande 50 déclenche la fonction associée au geste de commande GC détecté à l'étape a) (bloc E6 de la figure 2).

Lorsque la réponse R reçue infirme la commande (voie (4) de la figure 2), l'unité de commande 50 maintient les fonctions du véhicule telles qu'elles étaient au moment de la détection du geste de commande GC (bloc E7 de la figure 2).

Le procédé selon l'invention permet d'éviter les commandes involontaires des fonctions du véhicule par des gestes dits « faux-positifs », c'est-à-dire par des gestes de commande intempestifs réalisés dans le cadre d'interactions du conducteur avec son environnement, et non avec la volonté de commander lesdites fonctions.

En outre, grâce à l'étape b) de détermination de l'état d'interaction El du conducteur avec son environnement, le procédé selon l'invention limite les fois où le conducteur doit confirmer sa volonté de commander une fonction, puisque dans toutes les situations où le conducteur est dans l'état d'interaction nul, la fonction correspondant au geste de commande détecté est déclenchée sans interroger le conducteur (ce cas n'est pas mis en œuvre par l'invention).

Dans l'exemple décrit précédemment, il a été considéré que le conducteur était celui qui effectuait le geste de commande dans la zone de détection D, donc celui dont on détermine l'état d'interaction avec l'environnement, et celui que l'on interroge sur sa volonté de déclencher la fonction en cas d'état d'interaction actif.

Bien entendu, lorsque d'autres individus sont présents à bord du véhicule, tout individu ayant accès à la zone de détection D peut aussi réaliser des gestes de commande dans cette zone de détection D. Il est alors envisageable que le module de détermination du dispositif de commande surveille, en plus du conducteur, les autres individus présents dans le véhicule, de manière à déterminer leur état d'interaction respectif avec l'environnement. Le module de détermination peut alors comprendre des dispositifs de surveillance et/ou de détection de mouvements supplémentaires. On peut aussi prévoir de disposer ces dispositifs de surveillance et/ou de détection de mouvements à des endroits du véhicule permettant d'observer tous les individus éventuellement présents dans le véhicule. Lorsque d'autres individus sont présents à bord du véhicule, l'interface de communication du dispositif de commande peut quant à elle envoyer un signal à l'un quelconque de ces individus et recevoir une réponse de l'un quelconque de ces individus. Cela ne modifie pas le principe de fonctionnement du procédé selon l'invention.

Par ailleurs, le procédé selon l'invention s'applique à tous types de véhicules, notamment aux véhicules de transport de personnes ou de marchandises.

## Revendications

1. Procédé de commande d'au moins une fonction d'un véhicule (1) par un individu (4) présent à bord de ce véhicule (1), à travers l'accomplissement, par cet individu, d'au moins un geste de commande (GC) associé à cette fonction, selon lequel il est prévu des étapes de :
a) détection du geste de commande (GC) accompli par l'individu dans une zone de détection (D) dudit véhicule (1),
b) détermination d'un état d'interaction (El) entre ledit individu et son environnement, ledit état d'interaction (El) de l'individu avec l'environnement étant déterminé parmi un état d'interaction nul et un état d'interaction actif et
c) en fonction de l'état d'interaction (El) déterminé à l'étape b), commande de la fonction associée audit geste de commande (GC) détecté à l'étape a), **caractérisé en ce que**
lorsque l'état d'interaction (El) déterminé à l'étape b) est actif, l'étape c) comprend les sous-étapes suivantes :
c1) émission d'un signal (S) à destination d'au moins un individu (4) présent dans le véhicule (1),
c2) réception d'une réponse (R) d'au moins un individu (4) présent dans le véhicule, audit signal (S) émis à l'étape c1), et,
c3) en fonction de la réponse (R) reçue à l'étape c2), commande de la fonction associée audit geste de commande (GC) détecté à l'étape a).

2. Procédé selon la revendication 1, selon lequel, pour la détermination l'état d'interaction (El) de l'individu avec l'environnement, on utilise un dispositif de surveillance (21) dudit individu, ledit dispositif de surveillance (21) étant adapté à détecter des mouvements de lèvres de l'individu (4) et/ou des mouvements de tête et/ou du regard dudit individu (4).

3. Procédé selon l'une quelconque des revendications 1 ou 2, selon lequel, pour la détermination de l'état d'interaction (El) de l'individu (4) avec l'environnement, on utilise un dispositif de suivi de mouvements (22) du haut du corps dudit individu (4).

4. Procédé selon l'une quelconque des revendications 1 à 3, selon lequel le signal (S) émis à l'étape c1) comprend un signal lumineux et/ou un signal sonore, et/ou un message visuel et/ou un message audio et/ou un message haptique.

5. Procédé selon l'une quelconque des revendications 1 à 4, selon lequel la réponse (R) émise à l'étape c2) correspond à une réponse active de confirmation de la commande, ou à une réponse active ou passive d'infirmation de ladite commande.

6. Procédé selon la revendication 5, selon lequel la réponse (R) active de confirmation ou d'infirmation est réalisée par un individu présent dans le véhicule, en effectuant un geste de réponse prédéterminé, et/ou en regardant dans une direction spécifique, et/ou en agissant sur une interface du véhicule et/ou en produisant une commande orale.

7. Procédé selon l'une quelconque des revendications précédentes, selon lequel lorsque l'état d'interaction (El) déterminé à l'étape b) est nul, l'étape c) comprend la commande directe de la fonction associée audit geste de commande (GC) détecté à l'étape a).

8. Dispositif de commande (100) d'au moins une fonction d'un véhicule (1) par un individu (4) présent à bord de ce véhicule (1), à travers l'accomplissement, par cet individu (4), d'au moins un geste de commande (GC) associé à cette fonction, ledit dispositif de commande (100) comprenant :
- un module de détection (10) du geste de commande (GC) dans une zone de détection (D) dudit véhicule (1),
- un module de détermination (20) d'un état d'interaction (El) entre ledit individu (4) et son environnement, ledit état étant déterminé parmi un état d'interaction nul et un état d'interaction actif et
- une unité de commande (50) de ladite fonction programmée pour commander la fonction associée au geste de commande détecté par le module de détection en fonction de l'état d'interaction déterminé par le module de détermination.
**caractérisé en ce que** le dispositif est adapté à, lorsque le module de détection (10) détermine un état d'interaction (El) actif, émettre un signal (S) à destination d'au moins un individu (4) présent dans le véhicule (1), recevoir une réponse (R) d'au moins un individu (4) présent dans le véhicule, audit signal (S) émis à l'étape c1), et, en fonction de la réponse (R) commander la fonction associée audit geste de commande (GC) détecté.

9. Dispositif de commande (100) selon la revendication 8, dans lequel il est en outre prévu une interface de communication entre ledit dispositif de commande (100) et l'individu (4).

## Patentansprüche

1. Verfahren zur Steuerung mindestens einer Funktion eines Fahrzeugs (1) durch eine an Bord dieses Fahrzeug (1) anwesende Person (4) mittels der Ausführung, durch diese Person, mindestens einer dieser Funktion zugeordneten Steuergeste (GC), gemäß dem folgende Schritte vorgesehen sind:
a) Erfassung der von der Person ausgeführten Steuergeste (GC) in einer Erfassungszone (D) des Fahrzeugs (1),
b) Bestimmung eines Wechselwirkungszustands (EI) zwischen der Person und ihrer Umgebung, wobei der Wechselwirkungszustand (EI) der Person mit der Umgebung unter einem Wechselwirkungszustand Null und einem aktiven Wechselwirkungszustand bestimmt wird, und
c) abhängig vom im Schritt b) bestimmten Wechselwirkungszustand (EI) Steuerung der der im Schritt a) erfassten Steuergeste (GC) zugeordneten Funktion,
**dadurch gekennzeichnet, dass**, wenn der im Schritt b) bestimmte Wechselwirkungszustand (EI) aktiv ist, der Schritt c) die folgenden Teilschritte enthält:
c1) Senden eines Signals (S) an mindestens eine im Fahrzeug (1) anwesende Person (4),
c2) Empfang einer Antwort (R) von mindestens einer im Fahrzeug anwesenden Person (4) auf das im Schritt c1) gesendete Signal (S), und,
c3) abhängig von der im Schritt c2) empfangenen Antwort (R) Steuerung der der im Schritt a) erfassten Steuergeste (GC) zugeordneten Funktion.

2. Verfahren nach Anspruch 1, gemäß dem zur Bestimmung des Wechselwirkungszustands (EI) der Person mit der Umgebung eine Überwachungsvorrichtung (21) der Person verwendet wird, wobei die Überwachungsvorrichtung (21) geeignet ist, Lippenbewegungen der Person (4) und/oder Kopfbewegungen oder Blickbewegungen der Person (4) zu erfassen.

3. Verfahren nach einem der Ansprüche 1 oder 2, gemäß dem zur Bestimmung des Wechselwirkungszustands (EI) der Person (4) mit der Umgebung eine Bewegungsverfolgungsvorrichtung (22) des Oberkörpers der Person (4) verwendet wird.

4. Verfahren nach einem der Ansprüche 1 bis 3, gemäß dem das im Schritt c1) gesendete Signal (S) ein Lichtsignal und/oder ein Tonsignal und/oder eine visuelle Nachricht und/oder eine Audionachricht und/oder eine haptische Nachricht enthält.

5. Verfahren nach einem der Ansprüche 1 bis 4, gemäß dem die im Schritt c2) gesendete Antwort (R) einer aktiven Antwort der Bestätigung der Steuerung oder einer aktiven oder passiven Antwort der Ungültigmachung der Steuerung entspricht.

6. Verfahren nach Anspruch 5, gemäß dem die aktive Antwort (R) der Bestätigung oder Ungültigmachung von einer im Fahrzeug anwesenden Person durchgeführt wird, durch Ausführen einer vorbestimmten Antwortgeste und/oder durch Blicken in eine spezielle Richtung und/oder durch Einwirken auf eine Schnittstelle des Fahrzeugs und/oder durch Erzeugen einer mündlichen Steuerung.

7. Verfahren nach einem der vorhergehenden Ansprüche, gemäß dem, wenn der im Schritt b) bestimmte Wechselwirkungszustand (EI) Null ist, der Schritt c) die direkte Steuerung der der im Schritt a) erfassten Steuergeste (GC) zugeordneten Funktion enthält.

8. Steuervorrichtung (100) mindestens einer Funktion eines Fahrzeugs (1) durch eine an Bord dieses Fahrzeugs (1) anwesende Person (4) über die Ausführung, durch diese Person (4), mindestens einer dieser Funktion zugeordneten Steuergeste (GC), wobei die Steuervorrichtung (100) enthält:
- ein Erfassungsmodul (10) der Steuergeste (GC) in einer Erfassungszone (D) des Fahrzeugs (1),
- ein Bestimmungsmodul (20) eines Wechselwirkungszustands (EI) zwischen der Person (4) und ihrer Umgebung, wobei der Zustand zwischen einem Wechselwirkungszustand Null und einem aktiven Wechselwirkungszustand bestimmt wird, und
- eine Steuereinheit (50) der Funktion, die programmiert ist, um die der vom Erfassungsmodul erfassten Steuergeste zugeordnete Funktion abhängig vom durch das Bestimmungsmodul bestimmten Wechselwirkungszustand zu steuern,
**dadurch gekennzeichnet, dass** die Vorrichtung geeignet ist, wenn das Erfassungsmodul (10) einen aktiven Wechselwirkungszustand (EI) bestimmt, ein Signal (S) an mindestens eine im Fahrzeug (1) anwesende Person (4) zu senden, eine Antwort (R) auf das im Schritt c1) gesendete Signal (S)von mindestens einer im Fahrzeug anwesenden Person (4) zu empfangen, und abhängig von der Antwort (R) die der erfassten Steuergeste (GC) zugeordnete Funktion zu steuern.

9. Steuervorrichtung (100) nach Anspruch 8, bei der außerdem eine Kommunikationsschnittstelle zwischen der Steuervorrichtung (100) und der Person (4) vorgesehen ist.

## Claims

1. Method for controlling at least one function of a vehicle (1) by an individual (4) present onboard this vehicle (1), through the completion, by this individual, of at least one control gesture (GC) associated with this function, according to which the following steps are provided:
a) detection of the control gesture (GC) completed by the individual in a detection zone (D) of said vehicle (1),
b) determination of an interaction state (EI) between said individual and his or her environment, said interaction state (EI) of the individual with the environment being determined from among a zero interaction state and an active interaction state, and
c) based on the interaction state (EI) determined in step b), controlling of the function associated with the control gesture (GC) detected in step a), **characterized in that**
when the interaction state (EI) determined in step b) is active, step c) comprises the following substeps:
c1) transmission of a signal (S) to at least one individual (4) present in the vehicle (1),
c2) reception of a response (R) from at least one individual (4) present in the vehicle, to said signal (S) transmitted in step c1), and,
c3) based on the response (R) received in step c2), controlling of the function associated with said control gesture (GC) detected in step a).

2. Method according to Claim 1, according to which, for the determination of the interaction state (EI) of the individual with the environment, a device (21) for monitoring said individual is used, said monitoring device (21) being adapted to detect lip movements of the individual (4) and/or head movements and/or the gaze of said individual (4).

3. Method according to either one of Claims 1 and 2, according to which, for the determination of the interaction state (EI) of the individual (4) with the environment, a device (22) is used for tracking the movements of the top of the body said individual (4).

4. Method according to any one of Claims 1 to 3, according to which the signal (S) transmitted in step c1) comprises a light signal and/or a sound signal, and/or a visual message and/or an audio message and/or a haptic message.

5. Method according to any one of Claims 1 to 4, according to which the response (R) transmitted in step c2) corresponds to an active response of confirmation of the command, or to an active or passive response of denial of said command.

6. Method according to Claim 5, according to which the active response (R) of confirmation or of denial is made by an individual present in the vehicle, by performing a predetermined response gesture, and/or by gazing in a specific direction, and/or by acting on a surface of the vehicle and/or by producing an oral command.

7. Method according to any one of the preceding claims, according to which, when the interaction state (EI) determined in step b) is zero, step c) comprises the direct control of the function associated with said control gesture (GC) detected in step a).

8. Device (100) for controlling at least one function of a vehicle (1) by an individual (4) present onboard this vehicle (1), through the completion, by this individual (4), of at least one control gesture (GC) associated with this function, said control device (100) comprising:
- a module (10) for detecting the control gesture (GC) in a detection zone (D) of said vehicle (1),
- a module (20) for determining an interaction state (EI) between said individual (4) and his or her environment, said state being determined from among a zero interaction state and an active interaction state, and
- a unit (50) for controlling said function programmed to control the function associated with the control gesture detected by the detection module according to the interaction state determined by the determination module,
**characterized in that** the device is adapted to, when the detection module (10) determines an active interaction state (EI), transmit a signal (S) to at least one individual (4) present in the vehicle (1), receive a response (R) from at least one individual (4) present in the vehicle, to said signal (S) transmitted in step c1), and, based on the response (R), control the function associated with said detected control gesture (GC).

9. Control device (100) according to Claim 8, in which a communication interface between said control device (100) and the individual (4) is also provided.
